# EUROPÄISCHE PATENTSCHRIFT

(11) **EP 0 513 506 B1**
(45) Veröffentlichungstag und Bekanntmachung des Hinweises auf die Patenterteilung: **07.06.1995**
(21) Anmeldenummer: 92105430.0
(22) Anmeldetag: 30.03.1992
(51) Int. Cl.: F16M 5/00

(54) **Lagerung einer halbzylindrischen Abdeckhaube**
Support for a semi-cylindrical covering cap
Support d'un capot de protection demi-cylindrique

(30) Priorität: 25.04.1991 AT 869/91
(43) Veröffentlichungstag der Anmeldung: 19.11.1992
(73) Patentinhaber: WAAGNER-BIRO AKTIENGESELLSCHAFT, A-1221 Wien (AT)
(72) Erfinder: Beckmann, Georg, Dr., A-1030 Wien (AT); Rezac, Karl-Heinz, Dipl.-Ing., A-1220 Wien (AT); Kiss, Nikolaus, Dipl.-Ing., A-1220 Wien (AT); Schaitl, Johann, A-1220 Wien (AT)
(74) Vertreter: Wallner, Gerhard, Dipl.-Ing.

(56) Entgegenhaltungen:
- AT-B- 345 042
- DE-A- 2 739 701
- DE-A- 3 110 615
- DE-A- 3 835 465
- DE-B- 2 905 864
- FR-A- 2 208 501

## Beschreibung

Die Erfindung betrifft eine Lagerung mit einer Wanne und/oder Abdeckhaube enthaltend ein in eine krustenbildende und/oder erstarrende Flüssigkeit oder heiße Lösung, wie z. B. Krätze, schöpflöffelartig eintauchenden rotierenden Bauteil, der während seiner Rotation die Wanne oder Abdeckhaube berührt und durch Abstreifung der Flüssigkeit rein hält, unter Verwendung eines Festlagers und mehrerer Loslager.

Die AT B 345 042 und die DE A1 38 35 465 offenbaren Auflagerungen mit einem Fest- und mehreren Loslagern, wobei als Loslager auch Konstruktionen mit Blattfedern oder ähnlichen Federelementen (DE A1 31 10 615) oder verschiebbarem Loslager (DE A1 27 39 701) verwendet werden. Diese Lagerungen berücksichtigen Wärmedehnungen und sollen Zwangsspannungen durch Dehnungsausgleich allerdings bei gleicher Wärmeverteilung vermeiden.

Es ist bekannt, Abdeckungen so anzuordnen, daß sich bildende Ablagerungen einer gelagerten heißen Flüssigkeit durch einen Abstreifer periodisch entfernt werden, wobei aber Wärmespannungen durch ungleichmäßige Wärmezufuhr entstehen, die die Formbeständigkeit beeinträchtigen, sodaß zusätzliche Kräfte entstehen, die wieder den Geräuschpegel anheben.

Es ist daher ein Ziel der Erfindung, zusätzliche Kräfte (Zwangsspannungen) von der Abdeckung und gegebenenfalls auch von der Wanne abzuhalten und die Abdeckung und/oder Wanne wärmeelastisch quer zur Rotationsachse zu befestigen. Dadurch wird die Form beibehalten und auch der Geräuschpegel durch Ausschaltung von Kratzgeräuschen oder von Rattern bzw. Schlägen etc. gesenkt und damit auch der rotierende Bauteil von schwer berechenbaren Kräften entlastet, sodaß in der Praxis die Lebensdauer des rotierenden Bauteils erhöht wird.

Die Erfindung ist dadurch gekennzeichnet, daß das Festlager in der Mitte der Seite angeordnet ist, wo der rotierende Bauteil in die erstarrende Flüssigkeit oder heiße Lösung eintaucht und die Loslager zumindest im Bereich der Eckpunkte der im Grundriß rechteckigen Abdeckhaube und/oder Wanne vorgesehen sind. Ausgestaltungen der Erfindung sind in den Unteransprüchen 2 und 3 angegeben.

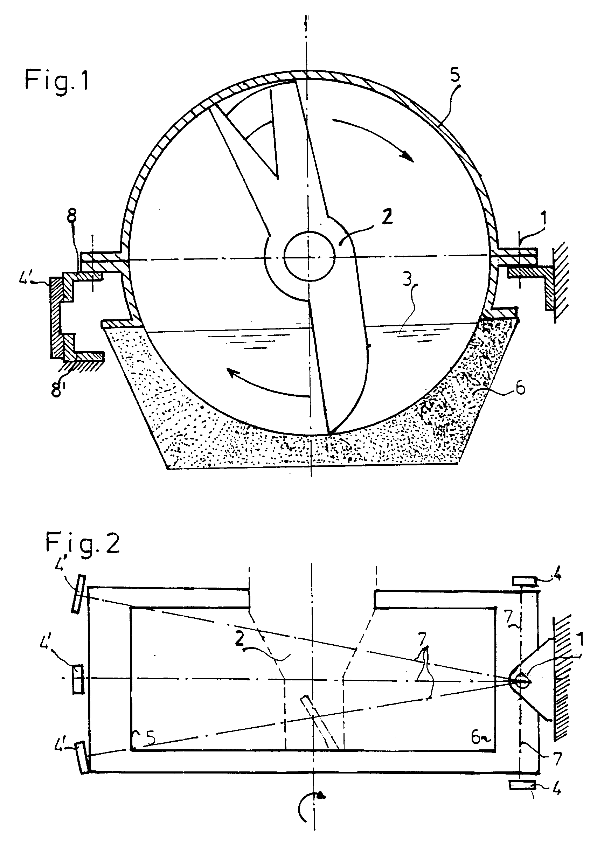

Die Erfindung ist in den Fig. 1 und 2 beispielsweise und schematisch dargestellt.

In Fig. 1 ist die Lagerung im Aufriß bei einer Krätzeaufbereitungsmaschine und in Fig. 2 in einem zugehörigen Grundriß dargestellt.

In Fig. 1 ist eine Wanne 6 mit einer Abdeckhaube 5 dargestellt, die zusammen einen kreisförmigen Innenquerschnitt aufweisen, in dem ein rotierender Bauteil 2 vorgesehen ist, der zwei Kragarme aufweist, die die Wanne bzw. die Abdeckhaube im warmen Zustand vorzugsweise beinahe berühren, von welchen einer als Schöpflöffel für die in der Wanne 6 befindliche Flüssigkeit 3 und der andere Arm als Abstreifer bzw. als Rührteil ausgebildet ist. Der Begriff Flüssigkeit ist sehr weit zu fassen und umfaßt auch teigige Substanzen, wie z. B. flüssige Krätze oder heiße Lösungen, die beim Verdampfen Krusten zurücklassen, die durch den Abstreifer zurück in die Flüssigkeit gefördert werden. Die Abdeckhaube 5, und gegebenenfalls auch die Wanne 6, sind an mehreren Punkten aufgehängt, wobei ein Punkt als Festlager 1 auf der Seite vorgesehen ist, auf der der Kragarm in die Flüssigkeit eintaucht und Druckkräfte in die Auflagerung eingebracht werden und die anderen Punkte, die durch die Abstreifung teilweise auf Zug belastet sind, als Loslager 4 bzw. 4' ausgebildet sind. Das Loslager 4, 4' wird von stehenden Blattfedern gebildet, die im Auflagerpunkt in Richtung der Flächennormalen, insbesondere in der Teilungsebene zwischen Abdeckhaube 5 und Wanne 6, auf den Fixpunkt des Festlager 1 ausgerichtet sind, sodaß sich die Abdeckhaube 5 bzw. die ganze heiße Konstruktion in Richtung der Flächennormalen 7 bewegen kann. Die Blattfedern sind jeweils an ihren Enden durch Winkel 8 bzw. 8' mit der Wanne 6 und/oder Abdeckaube 5 bzw. dem Fundament verbunden. Die Anordnung des Fixpunktes 1 ist so gewählt, daß die auftretende Reibung zwischen dem rotierenden Bauteil 2 und der Abdeckhaube 5 die Befestigung im Festlager 1 mittels Druck beaufschlagt, und die Loslager 4' dementsprechende Zugkräfte aufzunehmen haben. Diese Kräftebetrachtung erfolgt unabhängig von den Auflagerkräften, die natürlich in den meisten Fällen überwiegen.

In Fig. 2 ist die Anlage im Grundriß dargestellt, wobei die Ausrichtung der Flächennormalen der Blattfedern bzw. Loslager 4, 4' in Richtung auf das Festlager 1 verdeutlicht wird, indem die Flächennormalen der Loslager in der Teilungsebene der zu verbindenden Bauteile sich im Bereich des Fixpunktes des Festlagers 1 kreuzen.

## Patentansprüche

1. Lagerung mit einer Wanne (6) und/oder Abdeckhaube (5) enthaltend ein in eine krustenbildende und/oder erstarrende Flüssigkeit (3) oder heiße Lösung, wie z. B. Krätze, schöpflöffelartig eintauchenden rotierenden Bauteil (2), der während seiner Rotation die Wanne (6) oder Abdeckhaube (5) berührt und durch Abstreifung der Flüssigkeit (3) rein hält, unter Verwendung eines Festlagers (1) und mehrerer Loslager (4, 4'), dadurch gekennzeichnet, daß das Festlager (1) in der Mitte der Seite angeordnet ist, wo der rotierende Baute (2) in die erstarrende Flüssigkeit (3) oder heiße Lösung eintaucht und die Loslager (4, 4') zumindest im Bereich der Eckpunkte der im Grundriß rechteckigen Abdeckhaube (5) und/oder Wanne (6) vorgesehen sind.

2. Lagerung nach Anspruch 1, dadurch gekennzeichnet, daß die Loslager (4, 4') von stehenden Blattfedern gebildet sind, deren Flächenormale durch den Auflagerpunkt der Loslager (4, 4') sich im Bereich des Fixpunktes des Festlagers (1) kreuzen.

3. Lagerung nach Anspruch 1, dadurch gekennzeichnet, daß die Loslager (4, 4') auf der Seite der Lagerung wo der rotierende Bauteil (2) aus der Flüssigkeit (3) auftaucht als Zugelemente ausgebildet sind.

## Claims

1. Support including trough (6) and/or covering cap (5) containing a scoop-type rotating component (2) immerging into an encrusting and/or solidifying liquid (3) or hot solution such as dross, whereby this rotating component during its rotation comes into contact with the trough (6) or the covering cap (5) and keeps it clean by stripping the liquid (3), using one fixed bearing (1) and several movable bearings (4, 4'), characterized in that the fixed bearing (1) is arranged at the centre of the side, where the rotating component (2) immerges into the solidifying liquid (3) or the hot solution and that the movable bearings (4, 4') are provided at least in the corner area of the covering cap (5) with rectangular cross-section and/or of the trough (6).

2. Support according to claim 1, characterized in that the movable bearings (4, 4') are designed as vertical leaf springs whereby the normal lines of their surfaces through the supporting point of the movable bearings (4, 4') cross in the area of the fixed point of the fixed bearing (1).

3. Support according to claim 1, characterized in that the movable bearings (4, 4') on the side of the support where the rotating component (2) emerges out of the liquid (3) are designed as tension components.

## Revendications

1. Support comprenant une cuve (6) et/ou un capot de protection (5) contenant un élément (2) rotatif s'enfonçant comme une louche dans un liquide (3) ayant tendance à former une croûte et/ou à se solidifier ou une solution chaude, comme par exemple la crasse, ledit élément rotatif touchant dans sa rotation la cuve (6) ou le capot de protection (5) et la maintient propre par enlèvement du liquide (3), en utilisant un support (1) fixe et plusieurs supports (4,4') mobiles, caractérisé en ce que le support fixe (1) est disposé au milieu du côté sur lequel l'élément (2) rotatif s'enfonce dans le liquide (3) se solidifiant ou la solution chaude et que les supports (4,4') mobiles sont prévus au moins dans la zone des coins du capot de protection (5) et/ou de la cuve (6) ayant une projection horizontale rectangulaire.

2. Support selon la revendication 1, caractérisé en ce que les supports mobiles (4,4') sont formés par des ressorts à lames verticaux, dont les normales sur leur surface passant par le point de support des supports (4,4') se coupent dans la zone du point fixe du support fixe (1).

3. Support selon la revendication 1, caractérisé en ce que les supports mobiles (4,4') du côté du support, où l'élément rotatif (2) sort du liquide (3), sont conçus comme éléments de traction.
